# EUROPÄISCHE PATENTSCHRIFT

(11) **EP 3 867 749 B1**
(45) Veröffentlichungstag und Bekanntmachung des Hinweises auf die Patenterteilung: **06.12.2023**
(21) Anmeldenummer: 19787205.4
(22) Anmeldetag: 10.10.2019
(51) Int. Cl.: G06F 9/48

(54) **STEUERGERÄT ZUR STEUERUNG EINES INFORMATIONSSYSTEMS**
CONTROL UNIT FOR CONTROLLING AN INFORMATION SYSTEM
APPAREIL POUR LA COMMANDE D'UN SYSTÈME D'INFORMATION

(30) Priorität: 15.10.2018 DE 102018217609
(43) Veröffentlichungstag der Anmeldung: 25.08.2021
(73) Patentinhaber: Continental Automotive Technologies GmbH, 30165 Hannover (DE)
(72) Erfinder: KÖNIG, Axel, 60488 Frankfurt am Main (DE); BACH, Boris, 60488 Frankfurt am Main (DE); LOTZ, Andreas, 60488 Frankfurt am Main (DE)
(74) Vertreter: Continental Corporation
(86) Internationale Anmeldenummer: PCT/EP2019/077540
(87) Internationale Veröffentlichungsnummer: WO 2020/078835

(56) Entgegenhaltungen:
- US-A1- 2006 218 554
- Mark E Russinovich ET AL: "Processes, Threads, and Jobs in the Windows Operating System | Process Internals", , 17. Juni 2009 (2009-06-17), Seiten 1-40, XP055481586, Gefunden im Internet: URL:https://www.microsoftpressstore.com/ar ticles/printerfriendly/2233328 [gefunden am 2018-06-06]

## Beschreibung

Die Erfindung betrifft ein Steuergerät zur Steuerung eines Informationssystems, beispielsweise im Bereich der Embedded Automotive Steuergeräte in einem Kraftfahrzeug.

Im Bereich der Embedded Automotive Steuergeräte im Kraftfahrzeug kommen Modellierungswerkzeuge für die Mensch-Maschine-Schnittstelle zum Einsatz. Diese vereinfachen die Modellierung und Darstellung von visuellen Effekten und Audio-Effekten sowie Menüsteuerungen und logischer Ablaufkontrolle abhängig von Benutzereingaben. Die Applikationen, beispielsweise Applikationen des Kombiinstruments, wie zum Beispiel ein Bord-Computer, Applikationen des Infotainment-Systems Radio, Navigation, Klima, Medien, sind dabei im Allgemeinen in die Mensch-Maschine-Schnittstellensysteme eingebettet.

Ein industrieller Standard hierbei ist die Modellierung der logischen Kontrolle mittels UML 2.0 State-Machines. Mit Hilfe dieser Zustandsmodellierung können Zustände und Zustandsübergänge im Mensch-Maschine-Schnittstellensystem beschrieben werden. Die Zustandsübergänge können anhand von Animationen attraktiver gestaltet werden.

Ein neuer technischer Trend ist die Zusammenfassung mehrerer derartiger Systeme in einem Steuergerät beziehungsweise auf einer Controller-Plattform. Die Komplexität der Systeme steigt hier immens. Um nicht alle wechselseitigen Abhängigkeiten des Mensch-Maschine-Schnittstellensystems, das mehrere voneinander unabhängige Modelle umfasst, definieren zu müssen, werden Prioritätsmanagementsysteme eingesetzt. Diese Systeme beschreiben die wechselseitigen Abhängigkeiten verschiedener Mensch-Maschine-Applikationen durch deren Priorität und Ressourcenbedarf, beispielsweise die Ressourcen der Ein- und Ausgabeschnittstellen. Als Lösung für die oben genannten Probleme werden einfache Prioritätenmanager verwendet.

Spezielle technische Probleme sind dabei jedoch die Handhabung von Mindestanzeigezeiten, die Auswahl zwischen Alternativen und die Zuteilung von abzählbaren Ressourcen, die ihrerseits in Konkurrenz zu anderen Ressourcen stehen.

Während einer begrenzten Zeit (Mindestanzeigezeit) müssen Ressourcen vom System blockiert werden. Dies ist beispielsweise dann der Fall, wenn ein Warnungsklang vollständig abgespielt werden soll, sobald die Sound-Ausgabe verfügbar ist. Die Auswahl zwischen Alternativen lässt sich beispielsweise anhand der Zuteilung von Fenstern für Applikationen verdeutlichen. Eine Applikation soll beispielsweise in Fenster A dargestellt werden, wenn dies möglich ist. Falls jedoch Fenster A nicht verfügbar ist, soll die Applikation in Fenster B kleiner dargestellt werden. Wenn Fenster A verfügbar sein sollte, dann soll Fenster B nicht blockiert, sondern anderen Anwendungen zur Verfügung gestellt werden.

Die US 2006/218554 A1 bezieht sich auf das Gebiet der computerausführbaren Aufgaben. Insbesondere auf ein Verfahren, ein Datenverarbeitungssystem und einen Herstellungsgegenstand zur Verwaltung von ausführbaren Aufgaben des Datenverarbeitungssystems. Mark E. Russinovich ET AL: "Processes, Threads and Jobs in the Windows Operating System | Process Internals", 17. Juni 2009, Seiten 1-40, XP055481586, befasst sich allgemein mit Prozessen, Threads und Jobs im Windows-Betriebssystem.

Aufgrund der beschriebenen Problematik besteht ein Bedarf daran, ein Steuergerät zur Steuerung eines Informationssystems anzugeben, das ein dynamisches Verwaltungssystem bereitstellt, sodass zu jedem Zeitpunkt die Komplexität des Gesamtsystems hinsichtlich Funktion und Integrität sichergestellt ist.

Eine Ausführungsform eines Steuergeräts zur Steuerung eines Informationssystems ist im Patentanspruch 1 angegeben.

Das Steuergerät umfasst mehrere Ressourcen, die Eingabeeinrichtungen zur Eingabe von Informationen und Ausgabeeinrichtungen zur Ausgabe von Informationen aufweisen. Des Weiteren umfasst das Steuergerät eine Speichereinrichtung zur Speicherung von mehreren Applikationen und von programmierbaren Skripten, wobei jeder der Applikationen eine jeweilige Priorität zugeordnet ist. Darüber hinaus weist das Steuergerät einen Steuerrechner zur Ausführung der Applikationen auf. Der Steuerrechner führt die Applikationen dabei derart aus, dass die Applikationen in Abhängigkeit von der jeweiligen Priorität auf die Ressourcen zugreifen können. Der Steuerrechner ist insbesondere dazu ausgebildet, einen Zugriff der mehreren Applikationen auf die mehreren Ressourcen derart zu steuern, dass sich mehrere der Applikationen die mehreren Ressourcen teilen. Des Weiteren ist der Steuerrechner dazu ausgebildet, eine der Applikationen zusammen mit einem der programmierbaren Skripte zu verarbeiten.

Das Steuergerät kann mehrere Mensch-Maschine-Schnittstellensysteme umfassen. Der Steuerrechner ist dazu ausgebildet, dass sich die mehreren Mensch-Maschine-Schnittstellensysteme die Eingabeeinrichtungen und Ausgabeeinrichtungen der Ressourcen teilen.

Die Erfindung betrifft die Steuerung von Informationssystemen mit mehreren kooperierenden Mensch-Maschine-Schnittstellensystemen, die dadurch gekennzeichnet sind, dass sich mehrere derartiger Systeme Ein- und Ausgaberessourcen teilen. Wesentliche Merkmale sind die Verwendung von dynamischen Skripts, die der Anfrage beigefügt werden können und auf diese Weise in komplexen verteilten Mensch-Maschine-Schnittstellensystemen eine Abwicklung des Antrags mit besonderen, anfragerelevanten Maßnahmen ermöglichen.

Auf diese Weise werden bei Ausführung der Zuteilung mit einer bestimmten Priorität die Spezialfälle dieser Zuteilung abgearbeitet. Das Ergebnis der Operation kann durch die Applikation in der weiteren Verarbeitung berücksichtigt werden und dient dann zum Beispiel der Umsetzung eines sogenannten "Response Design". Die genannte Funktion entspricht einer sogenannten "virtuellen Maschine" und kann daher für Funktionen, die keine besonderen Anforderungen an eine Zuteilung haben, also einen Standard-Anwendungsfall abbilden, komplett verborgen bleiben. Die Skripte sind dabei für eine Anfrage optional, sodass die Abarbeitung von normalen Fällen ohne derartige Skripte nicht komplexer wird.

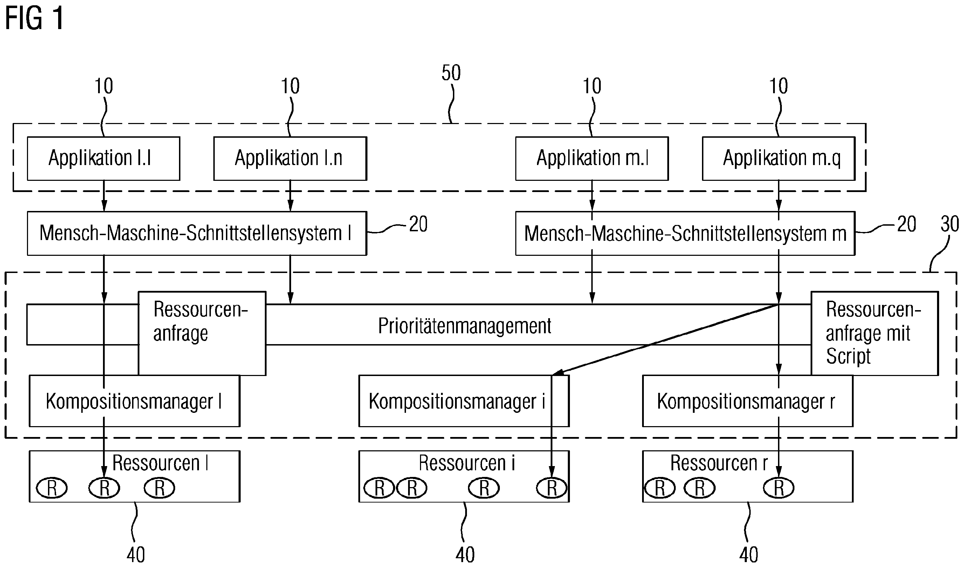

Die Ausgestaltung des erfindungsgemäßen Steuergeräts zur Steuerung eines Informationssystems ist in der Figur 1 dargestellt. Das Architekturbild der Figur 1 dient zur Erläuterung der Funktionalität des Steuergeräts.

Die Lösung der Koordination mehrerer HMI-Frameworks auf einem Gerät besteht in der Verwendung eines Systems zur Verwaltung von Anforderungen mit dynamischer Priorität. Die komplexeren Anforderungen werden dabei als Skripte beigefügt. Das in der Figur 1 gezeigte Architekturbild skizziert diese Lösung.

Das Steuergerät zur Steuerung des Informationssystems umfasst mehrere Ressourcen 40, die Eingabeeinrichtungen zur Eingabe von Informationen und Ausgabeeinrichtungen zur Ausgabe von Informationen aufweisen. Weiterhin umfasst das Steuergerät eine Steuereinrichtung 50 zur Speicherung von mehreren Applikationen 10. Dargestellt sind in der Figur 1 die Applikationen 1.1 und Ln sowie m.1 und m.q. Darüber hinaus umfasst das Steuergerät einen Steuerrechner 30 zur Ausführung der Applikationen 10 in der Weise, dass die Applikationen 10 auf die Ressourcen 40 zugreifen können. Der Steuerrechner 30 ist insbesondere dazu ausgebildet, einen Zugriff der mehreren Applikationen 10 auf die mehreren Ressourcen 40 derart zu steuern, dass sich mehrere der Applikationen 10 die mehreren der Ressourcen 40 teilen.

Das Steuergerät umfasst des Weiteren mehrere Mensch-Maschine-Schnittstellensysteme 20, wobei in der Figur 1 ein Mensch-Maschine-Schnittstellensystem 1 sowie ein Mensch-Maschine-Schnittstellensystemm gezeigt ist. Der Steuerrechner 30 ist dazu ausgebildet, dass sich die mehreren der Mensch-Maschine-Schnittstellensysteme 20 die Eingabeeinrichtungen und Ausgabeeinrichtungen teilen.

Wie bereits oben angedeutet, ist jeder der Applikationen 10 eine jeweilige Priorität zugeordnet. Der Steuerrechner 30 ist insbesondere dazu ausgebildet, Anforderungen der Applikationen 10 in Bezug auf die Ressourcen 40 mit veränderlicher Priorität durchzuführen.

Gemäß einer Ausführungsform ist der Steuerrechner 30 zur Ausführung eines Prioritätenmanagements ausgebildet. Dabei teilt der Steuerrechner 30 in Abhängigkeit von der einer jeweiligen Applikation 10 zugeordneten Priorität der Applikation vorrangig oder nachrangig zu anderen Applikationen eine der Ressourcen 40 zu.

Beim Zugriff auf eine Ressource erfragt eine Applikation implizit oder auch explizit die Zuteilung über den Steuerrechner 30, der als Prioritätenmanager eingesetzt wird. Der Steuerrechner/Prioritätenmanager 30 steuert wiederum einen für die zugeteilte Ressourcengruppe zuständigen Kompositionsmanager. Durch diese Anordnung hat die Entscheidung des Steuerrechners (Prioritätenmanagers) direkt Auswirkungen auf die Reaktion des Systems.

Als kleinste Einheit wird eine Ressource 40 angesehen. Mehrere Ressourcen 40 können zu einer Gesamtanfrage gebündelt werden. Der Steuerrechner 30 ist derart ausgebildet, dass er jeder der Ressourcen 40 in Abhängigkeit von der Applikation 10 ein erstes Merkmal zuordnet, wenn die Zuteilung einer der Ressourcen 40 für die jeweilige Applikation 10 obligatorisch ist. Des Weiteren ist der Steuerrechner 30 derart ausgebildet, dass er jeder der Ressourcen 40 in Abhängigkeit von den Applikationen 10 ein zweites Merkmal zuordnet, wenn die Zuteilung einer der Ressourcen 40 für die jeweilige Applikation 10 optional ist. Der Steuerrechner 30 ist insbesondere dazu ausgebildet, jeder der Ressourcen 40 das erste und zweite Merkmal bei der Zuteilung der Ressource zu einer der Applikationen 10 und bei Entzug der Ressource 40 zuzuteilen.

Die Ressourcen 40 können somit von dem Steuerrechner 30 als obligatorisch oder optional bei erstmaliger Zuteilung sowie als obligatorisch oder optional bei Entzug, also bei bereits bestehender Zuteilung, gekennzeichnet werden. Wenn die Ressourcen, die als obligatorisch gekennzeichnet wurden, bei Zuteilung nicht vorliegen, so wird die Zuteilung der Gesamtanfrage von dem Steuerrechner 30 abgelehnt. Der Gesamtanfrage wird eine Priorität zugeordnet.

Gemäß einer möglichen Ausführungsform des Steuergeräts weist das Steuergerät eine Speichereinrichtung 50 auf, die zur Speicherung mindestens eines Skripts ausgebildet ist. Die Applikationen 10 und das mindestens eine Skript sind in der Speichereinrichtung 50 derart gespeichert, dass einer der Applikationen 10 das mindestens eine Skript zugeordnet ist. Der Steuerrechner 30 ist dazu ausgebildet, bei Ausführung der einen der Applikationen 10 das mindestens eine dieser Applikation zugehörige Skript auszuführen.

Gemäß einer möglichen Ausführungsform ist jedem der Skripte ein Zeitzähler (Timer) zugeordnet. Der Steuerrechner 30 ist dazu ausgebildet, jeder der Applikationen 10 in Abhängigkeit von einem Stand des Zeitzählers eine der Ressourcen 40 zuzuteilen.

Gemäß einer Ausführungsform des Steuergeräts kann der Steuerrechner 30 dazu ausgebildet sein, jeder der Applikationen 10 einen Ablaufwert des zugehörigen Zeitzählers zuzuweisen. Der Steuerrechner 30 ist dazu ausgebildet, einer jeweiligen der Applikationen 10 die zugeteilte Ressource 40 zu entziehen, wenn der jeweiligen Zeitzähler den Ablaufwert erreicht hat.

Eine Gesamtanfrage besitzt beispielsweise eine Anzahl von n Zeitzählern (Timern), die durch die Skripte mit Ablaufwerten vorbelegt werden können. Der Gesamtanfrage können nun Skripte je nach Startzeitpunkt beigefügt werden, die während der Abarbeitung durch den Steuerrechner 30, der als Prioritätenentscheider arbeitet, zur Ausführung kommen.

Der Steuerrechner 30 ist dazu ausgebildet, ein jeweiliges der Skripte zu starten, wenn die Verfügbarkeit der jeweiligen Ressource 40 bei der Zuteilung gegeben ist und/oder wenn die jeweilige Ressource 40 einer der Applikationen 10 zugeteilt worden ist und/oder wenn eine Nicht-Verfügbarkeit der Ressourcen 40 vorliegt und/oder wenn der jeweilige Zeitzähler abgelaufen ist und/oder bei Beendigung der Zuteilung der Ressourcen.

Skripte können somit gestartet werden durch die folgenden Ereignisse:
a) bei Verfügbarkeit der Ressourcen bei der Zuteilung durch den Steuerrechner/Prioritätenmanager;
b) nach Zuweisung der Ressourcen nach der Zuteilung durch den Prioritätenmanager;
c) bei Nicht-Verfügbarkeit der Ressourcen wie in der Gesamtanfrage beschrieben;
d) bei Ablauf des Zeitzählers (Timers) der Gesamtanfrage; und
E) bei Beendigung der Zuteilung für alle Gesamtanfragen.

Gemäß einer möglichen Ausführungsform des Steuergeräts kann der Steuerrechner 30 dazu ausgebildet sein, bei der Abarbeitung eines der Skripte festzustellen, ob die Zuteilung aller Ressourcen 40 oder bestimmter Ressourcen erfolgt ist und/oder ob die Zuteilung einer der Ressourcen zum ersten Mal erfolgt ist. Des Weiteren kann der Steuerrechner 30 dazu ausgebildet sein, bei der Abarbeitung eines der Skripte aufgrund einer Abfrage in der Ausführung zu verzweigen und/oder Ressourcen 40 zu den als verfügbar gekennzeichneten Ressourcen zurückzugeben und/oder eine Priorität der jeweiligen Ressource 40 anzuheben oder abzusenken und/oder den Zeitzähler zu starten und/oder alle Ressourcen 40 als wieder verfügbar zurückzugeben.

Erfindungsgemäß führen Skripte zumindest die folgende Aufgabe aus:
a) die eigene Priorität bis zu einer applikationsspezifischen maximalen Priorität anheben beziehungsweise absenken.
   Ferner können Skripte die folgenden Aufgaben ausführen:
b) Abfragen, ob die Zuteilung als Ganzes oder gewisser Ressourcen erfolgte; (Derartige Abfragen sind insbesondere für solche Ressourcen sinnvoll, die als optional gekennzeichnet waren.);
c) Abfragen, ob eine Zuteilung zum ersten Mal erfolgte;
d) Aufgrund einer Abfrage in der Ausführung verzweigen; und
e) Ressourcen in einen Pool der verfügbaren Ressourcen zurückgeben, damit Anfragen geringerer Priorität diese nachrangig beanspruchen können;
f) einen der Zeitzähler (Timer) starten; und
g) eine Anfrage als "nicht zugeteilt" erklären und alle Ressourcen zurückgeben.

Im Folgenden wird auf das Verhalten des Steuerrechners 30 in der Funktion des Prioritätenmanagers eingegangen. Zunächst sortiert der Steuerrechner/Prioritätenmanager die Anfragen nach der Anfragepriorität. Der Steuerrechner 30 ist insbesondere dazu ausgebildet, die verfügbaren Ressourcen 40 mit einem die Verfügbarkeit kennzeichnenden Merkmal zu versehen. Die im System verfügbaren Ressourcen werden somit als "verfügbar" gekennzeichnet. Weiterhin ist der Steuerrechner 30 dazu ausgebildet, die Anfragen der Applikationen 10 in Abhängigkeit von der jeweiligen Priorität abzuarbeiten.

Sind beispielsweise alle als obligatorisch gekennzeichneten Ressourcen verfügbar, so wird zunächst das Ereignis "Verfügbarkeit der Ressourcen bei der Zuteilung durch den Prioritätenmanager" ausgelöst. Wenn danach noch die Anfrage besteht, werden die in der Anfrage genannten Ressourcen aus dem System entfernt und das Ereignis "Nach Zuweisung der Ressourcen nach der Zuteilung durch den Prioritätenmanager" ausgelöst. Wenn danach die Anfrage nicht mehr besteht, werden die Ressourcen zurückgegeben. Zum Schluss wird das Ereignis "Beendigung der Zuteilung für alle Gesamtanfragen" ausgelöst.

Im Folgenden werden technische Vorteile des erfindungsgemäßen Steuergeräts mit den dynamischen Skripten anhand beispielhafter Lösungen der oben beschriebenen Probleme beschrieben.

Ein erstes Ausführungsbeispiel betrifft die Handhabung der Mindestanzeigezeit. Dabei erfolgt die Veränderung der Priorität innerhalb vorgegebener Grenzen. Der Anfrage wird beispielsweise ein Skript beigefügt, das bei dem Ereignis "Nach Zuweisung der Ressourcen nach der Zuteilung durch den Prioritätenmanager" gestartet wird. Nach Abfrage der erstmaligen Zuteilung wird die Priorität von dem Skript auf die höchstmögliche Priorität angehoben. Danach wird der erste Zeitzähler (Timer 0) gestartet und sein Ablaufwert auf die Dauer der Mindestanzeigezeit gesetzt. Der Anfrage kann des Weiteren ein Skript beigefügt werden, das bei dem Ereignis "Ablauf des Zeitzählers 0 (Timer 0)" der Gesamtanfrage aktiviert wird. Diese setzt die Priorität herunter auf die Priorität bei der Erstanfrage.

Die betreffende Gesamtanfrage besitzt nun ab erstmaliger Zuteilung für die Dauer der Mindestanzeige die applikationsspezifische höchstmögliche Priorität. Wie man an der Ausführung erkennen kann, ist dies rein applikativ nicht ohne das Risiko der Race-Condition lösbar, da die Skriptausführung unmittelbar während der Zuteilung vor Berücksichtigung nachrangiger Anfragen geschieht. In einem hochgradig asynchronen verteilten Mensch-Maschine-System ist dieser Umstand von essentieller Bedeutung.

Als konkrete Anwendung kann zum Beispiel ein auszugebender Warnton oder eine Navigationsansage dienen, welche in jedem Fall zu Ende gespielt werden muss. Hierbei hebt die Anwendung selbständig die eigene Priorität für einen begrenzten Zeitraum an.

Im Weiteren wird ein Beispiel der Auswahl zwischen Alternativen erläutert. Die Ressource "Anzeige-Fenster A" und "Anzeige-Fenster B" werden als "optional" bei Zuteilung und Entzug gekennzeichnet. Der Anfrage wird beispielsweise ein Skript beigefügt, das bei dem Ereignis "Verfügbarkeit der Ressourcen bei der Zuteilung durch den Prioritätenmanager" gestartet wird.

Nach Abfrage der Verfügbarkeit von Fenster A wird Fenster B zurückgegeben beziehungsweise nicht beansprucht. Andernfalls, also bei Nicht-Verfügbarkeit von Fenster A, wird bei der Nicht-Verfügbarkeit von Fenster B die Anfrage als "nicht zugeteilt" gekennzeichnet. Die betreffende Gesamtanfrage kann nach Zuteilung der Ressourcen "Anzeige-Fenster A" und "Anzeige-Fenster B" unbehelligt abwägen und die präferierte Konfiguration behalten und die übrigen Ressourcen zurückgeben. Dies wäre rein applikativ nicht möglich, da es in einem asynchronen System mit gemischten Anfrageverhalten sonst zu Fehlern kommen könnte.

Im Folgenden wird ein Beispiel der Teilung einer abzählbaren Ressource "teilbares Anzeigefenster" mit Hilfe des Prioritätenmanagements erläutert. Gegeben sei ein Anzeigefenster, dessen Eigenschaft es sein soll, in bis zu drei Unterfenster unterteilt zu werden, im Falle, dass sich mehr als drei Applikationen um die Darstellung in diesem Fenster bewerben. Für den Fall, dass sich nur eine Applikation um das Fenster bewirbt, soll diese Applikation das Fenster exklusiv als Ganzes erhalten. In dem vorliegenden Beispiel soll die Unterteilung nach Prioritäten sortiert erfolgen, also mit der wichtigsten Applikation zu oberst und so weiter. Für den Fall, dass das gesamte Fenster im Konflikt zu einem wichtigeren Fenster, zum Beispiel Popup-Fenster, steht, soll es nicht dargestellt werden.

Die Gesamtanfrage aller Applikationen beinhaltet die Anfrage einer binären Ressource "geteiltes Anzeigefenster" sowie einer zählenden Ressource "Anteil am geteilten Anzeigefenster" mit je einem Zähler. Hier erfolgt die Verknüpfung von Ressourcen binärer und abzählbarer Art.

Der Anfrage wird nun ein Skript beigefügt, das bei dem Ereignis "Nach Zuweisung der Ressourcen nach der Zuteilung durch den Prioritätenmanager" gestartet wird. Das Skript bewirkt die Rückgabe der Ressource "geteiltes Anzeigefenster" an den Pool. Die abzählbare Ressource "Anteil am geteilten Anzeigefenster" wird auf den Wert 3 initialisiert. Die Ressource "geteiltes Anzeigefenster" wird auf den Wert "verfügbar" initialisiert.

Damit eine Anfrage das Ereignis "Nach Zuweisung der Ressourcen nach der Zuteilung durch den Prioritätenmanager" erhält, müssen zwei Bedingungen erfüllt sein. Zunächst muss die Ressource "geteiltes Anzeigefenster" verfügbar sein und darüber hinaus muss mindestens noch ein Anteil an der abzählbaren Ressource "Anteil am geteilten Anzeigefenster" verfügbar gewesen sein. Damit nun nachrangige Anfragen mit geringerer Priorität einen Anteil erhalten können, muss die Ressource "geteiltes Anzeigefenster" durch das Skript zurückgegeben werden. Falls vorrangige Applikationen die Ressource "geteiltes Anzeigefenster" bereits durch entsprechende Konfliktauswertung entnommen haben, so ist dieses für keine nachrangige Anfrage mehr verfügbar.

Nach Auswertung der Zuteilung, also nach dem Ereignis "Beendigung der Zuteilung für alle Gesamtanfragen" der abzählbaren Ressource "Anteil am geteilten Anzeigefenster" nach Beendigung der Zuteilung kann dann die Einteilung des geteilten Fensters erfolgen. Nach Benachrichtigung der bis zu drei teilnehmenden Applikationen über die nun zur Verfügung stehende Fensterfläche erfolgt nun zum Beispiel ein sogenanntes "Response Design". Dabei passen sich die Inhalte an die zur Verfügung stehende Fläche des Fensters und insgesamt an die Ein- und Ausgabemöglichkeiten an.

## Patentansprüche

1. Steuergerät zur Steuerung eines Informationssystems, umfassend:
- mehrere Ressourcen (40), die Eingabeeinrichtungen zur Eingabe von Informationen und Ausgabeeinrichtungen zur Ausgabe von Informationen aufweisen,
- eine Speichereinrichtung (50) zur Speicherung von mehreren Applikationen (10) und von programmierbaren Skripten, wobei jeder der Applikationen eine jeweilige Priorität zugeordnet ist,
- einen Steuerrechner (30), zur Ausführung der Applikationen (10) derart, dass die Applikationen (10) in Abhängigkeit von der jeweiligen Priorität auf die Ressourcen zugreifen,
- wobei der Steuerrechner dazu ausgebildet ist, Anfragen der Applikationen (10) nach Ressourcen in Abhängigkeit einer Priorität der Anfrage zu sortieren und abzuarbeiten,
- wobei der Steuerrechner (30) dazu ausgebildet ist, einen Zugriff der mehreren Applikationen (10) auf die mehreren Ressourcen (40) derart zu steuern, dass sich mehrere der Applikationen (10) die Eingabeeinrichtungen und Ausgabeeinrichtungen der Ressourcen (40) teilen,
- wobei der Steuerrechner (30) dazu ausgebildet ist, eine der Applikationen (10) zusammen mit einem der programmierbaren Skripte zu verarbeiten, wobei die Skripte Anfragen der Applikationen nach Ressourcen beifügbar sind, und
- wobei die Skripte zumindest die folgende Aufgabe ausführen:
a) die eigene Priorität bis zu einer applikationsspezifischen maximalen Anfragepriorität anheben beziehungsweise absenken.

2. Steuergerät nach Anspruch 1,
- wobei jedem der Skripte ein Zeitzähler zugeordnet ist,
- wobei der Steuerrechner (30) dazu ausgebildet ist, jeder der Applikationen (10) in Abhängigkeit von einem Stand des Zeitzählers eine der Ressourcen (40) zuzuteilen und jeder der Applikationen (10) einen Ablaufwert des zugehörigen Zeitzählers zuzuweisen.

3. Steuergerät nach Anspruch 2,
wobei der Steuerrechner (30) dazu ausgebildet ist, einer jeweiligen der Applikationen (10) die zugeteilte Ressource (40) zu entziehen, wenn der jeweilige Zeitzähler den Ablaufwert erreicht hat.

4. Steuergerät nach einem der Ansprüche 1 bis 3,
wobei der Steuerrechner (30) dazu ausgebildet ist, ein jeweiliges der Skripte zu starten, wenn die Verfügbarkeit der jeweiligen Ressource (40) bei der Zuteilung gegeben ist.

5. Steuergerät nach einem der Ansprüche 1 bis 4,
wobei der Steuerrechner (30) dazu ausgebildet ist, ein jeweiliges der Skripte zu starten, wenn die jeweilige Ressource (40) einer der Applikationen (10) zugeteilt worden ist.

6. Steuergerät nach einem der Ansprüche 1 bis 5,
wobei der Steuerrechner (30) dazu ausgebildet ist, ein jeweiliges der Skripte zu starten, wenn eine Nicht-Verfügbarkeit der Ressourcen (40) vorliegt.

7. Steuergerät nach einem der Ansprüche 1 bis 6,
wobei der Steuerrechner (30) dazu ausgebildet ist, ein jeweiliges der Skripte zu starten, wenn der jeweilige Zeitzähler abgelaufen ist.

8. Steuergerät nach einem der Ansprüche 1 bis 7,
wobei der Steuerrechner (30) dazu ausgebildet ist, ein jeweiliges der Skripte bei Beendigung der Zuteilung der Ressourcen (10) zu starten.

9. Steuergerät nach einem der Ansprüche 1 bis 8,
wobei der Steuerrechner (30) dazu ausgebildet ist, bei der Abarbeitung eines der Skripte festzustellen, ob die Zuteilung aller Ressourcen (40) zu den Applikationen oder bestimmter Ressourcen zu den Applikationen erfolgt ist.

10. Steuergerät nach einem der Ansprüche 1 bis 9,
wobei der Steuerrechner (30) dazu ausgebildet ist, bei der Abarbeitung eines der Skripte festzustellen, ob die Zuteilung einer der Ressourcen zu den Applikationen zum ersten Mal erfolgt ist.

11. Steuergerät nach einem der Ansprüche 1 bis 10,
wobei der Steuerrechner (30) dazu ausgebildet ist, bei der Abarbeitung eines der Skripte aufgrund einer Abfrage in der Ausführung zu verzweigen.

12. Steuergerät nach einem der Ansprüche 1 bis 11,
wobei der Steuerrechner (30) dazu ausgebildet ist, bei der Abarbeitung eines der Skripte Ressourcen (40) zu den als verfügbar gekennzeichneten Ressourcen zurückzugeben.

13. Steuergerät nach einem der Ansprüche 1 bis 12,
wobei der Steuerrechner (30) dazu ausgebildet ist, bei der Abarbeitung eines der Skripte den Zeitzähler zu starten.

14. Steuergerät nach einem der Ansprüche 1 bis 12,
wobei der Steuerrechner (30) dazu ausgebildet ist, bei der Abarbeitung eines der Skripte alle Ressourcen (40) als wieder verfügbar zurückzugeben.

## Claims

1. Control unit for controlling an information system, comprising:
- multiple resources (40), which have input devices for inputting information and output devices for outputting information,
- a storage device (50) for storing multiple applications (10) and programmable scripts, each of the applications having a respective associated priority,
- a control computer (30) for executing the applications (10) in such a way that the applications (10) access the resources on the basis of the respective priority,
- wherein the control computer is designed to sort and handle requests by the applications (10) for resources on the basis of a priority of the request,
- wherein the control computer (30) is designed to control access by the multiple applications (10) to the multiple resources (40) in such a way that multiple instances of the applications (10) share the input devices and output devices of the resources (40),
- wherein the control computer (30) is designed to process one of the applications (10) together with one of the programmable scripts, the scripts being able to be added to requests by the applications for resources, and
- wherein the scripts perform at least the following task:
a) raising or lowering their own priority as far as an application-specific maximum request priority.

2. Control unit according to Claim 1,
- wherein each of the scripts has an associated time meter,
- wherein the control computer (30) is designed to allocate one of the resources (40) to each of the applications (10) on the basis of a reading on the time meter and to assign an expiry value of the associated time meter to each of the applications (10).

3. Control unit according to Claim 2,
wherein the control computer (30) is designed to withdraw the allocated resource (40) from a respective instance of the applications (10) if the respective time meter has reached the expiry value.

4. Control unit according to one of Claims 1 to 3,
wherein the control computer (30) is designed to start a respective instance of the scripts if the respective resource (40) is available during allocation.

5. Control unit according to one of Claims 1 to 4,
wherein the control computer (30) is designed to start a respective instance of the scripts if the respective resource (40) has been allocated to one of the applications (10).

6. Control unit according to one of Claims 1 to 5,
wherein the control computer (30) is designed to start a respective instance of the scripts if the resources (40) are unavailable.

7. Control unit according to one of Claims 1 to 6,
wherein the control computer (30) is designed to start a respective instance of the scripts if the respective time meter has expired.

8. Control unit according to one of Claims 1 to 7,
wherein the control computer (30) is designed to start a respective instance of the scripts on termination of the allocation of the resources (10).

9. Control unit according to one of Claims 1 to 8,
wherein the control computer (30) is designed so as, when handling one of the scripts, to establish whether all resources (40) have been allocated to the applications or certain resources have been allocated to the applications.

10. The control unit according to one of Claims 1 to 9,
wherein the control computer (30) is designed so as, when handling one of the scripts, to establish whether one of the resources has been allocated to the applications for the first time.

11. Control unit according to one of Claims 1 to 10,
wherein the control computer (30) is designed so as, when handling one of the scripts, to jump during execution on the basis of a query.

12. Control unit according to one of Claims 1 to 11,
wherein the control computer (30) is designed so as, when handling one of the scripts, to return resources (40) to the resources flagged as available.

13. Control unit according to one of Claims 1 to 12,
wherein the control computer (30) is designed so as, when handling one of the scripts, to start the time meter.

14. Control unit according to one of Claims 1 to 12,
wherein the control computer (30) is designed so as, when handling one of the scripts, to return all resources (40) as available again.

## Revendications

1. Appareil de commande permettant de commander un système d'information, comprenant :
- plusieurs ressources (40) qui présentent des dispositifs d'entrée pour entrer des informations et des dispositifs de sortie pour sortir des informations,
- un dispositif de stockage (50) pour stocker plusieurs applications (10) et des scripts programmables, une priorité respective étant associée à chacune des applications,
- un ordinateur de commande (30) pour exécuter les applications (10) de telle sorte que les applications (10) accèdent aux ressources en fonction de la priorité respective,
- dans lequel l'ordinateur de commande est réalisé pour trier et traiter les demandes de ressources des applications (10) en fonction d'une priorité de la demande,
- dans lequel l'ordinateur de commande (30) est réalisé pour commander un accès des plusieurs applications (10) aux plusieurs ressources (40) de telle sorte que plusieurs des applications (10) se partagent les dispositifs d'entrée et les dispositifs de sortie des ressources (40),
- dans lequel l'ordinateur de commande (30) est réalisé pour traiter l'une des applications (10) conjointement avec l'un des scripts programmables, dans lesquels des demandes de ressources des applications peuvent être ajoutées aux scripts, et
- dans lequel les scripts exécutent au moins l'opération suivante :
a) augmenter ou réduire leur propre niveau de priorité jusqu'à un niveau de priorité de demande maximal spécifique à l'application.

2. Appareil de commande selon la revendication 1,
- dans lequel un compteur horaire est associé à chacun des scripts,
- dans lequel l'ordinateur de commande (30) est réalisé pour attribuer à chacune des applications (10) l'une des ressources (40) en fonction d'une valeur du compteur horaire et pour affecter une valeur d'expiration du compteur horaire associé à chacune des applications (10).

3. Appareil de commande selon la revendication 2,
dans lequel l'ordinateur de commande (30) est réalisé pour retirer la ressource attribuée (40) à une application respective parmi les applications (10) lorsque le compteur horaire respectif a atteint la valeur d'expiration.

4. Appareil de commande selon l'une quelconque des revendications 1 à 3, dans lequel l'ordinateur de commande (30) est réalisé pour lancer un script respectif parmi les scripts lorsque la disponibilité de la ressource respective (40) est avérée au moment de l'attribution.

5. Appareil de commande selon l'une quelconque des revendications 1 à 4, dans lequel l'ordinateur de commande (30) est réalisé pour lancer un script respectif parmi les scripts lorsque la ressource respective (40) a été affectée à l'une des applications (10).

6. Appareil de commande selon l'une quelconque des revendications 1 à 5, dans lequel l'ordinateur de commande (30) est réalisé pour lancer un script respectif parmi les scripts en cas de non-disponibilité des ressources (40).

7. Appareil de commande selon l'une quelconque des revendications 1 à 6, dans lequel l'ordinateur de commande (30) est réalisé pour lancer un script respectif parmi les scripts lorsque le compteur horaire respectif a expiré.

8. Appareil de commande selon l'une quelconque des revendications 1 à 7, dans lequel l'ordinateur de commande (30) est réalisé pour lancer un script respectif parmi les scripts lorsque l'affectation des ressources (10) est terminée.

9. Appareil de commande selon l'une quelconque des revendications 1 à 8, dans lequel l'ordinateur de commande (30) est réalisé pour constater lors du traitement d'un des scripts si l'affectation de toutes les ressources (40) aux applications ou de certaines ressources aux applications a eu lieu.

10. Appareil de commande selon l'une quelconque des revendications 1 à 9, dans lequel l'ordinateur de commande (30) est réalisé pour constater lors du traitement d'un des scripts si l'affectation d'une des ressources aux applications a eu lieu pour la première fois.

11. Appareil de commande selon l'une quelconque des revendications 1 à 10, dans lequel l'ordinateur de commande (30) est réalisé lors du traitement d'un des scripts pour suivre un branchement en raison d'une interrogation dans l'exécution.

12. Appareil de commande selon l'une quelconque des revendications 1 à 11, dans lequel l'ordinateur de commande (30) est réalisé lors du traitement d'un des scripts pour rendre des ressources (40) aux ressources identifiées comme disponibles.

13. Appareil de commande selon l'une quelconque des revendications 1 à 12, dans lequel l'ordinateur de commande (30) est réalisé lors du traitement d'un des scripts pour lancer le compteur horaire.

14. Appareil de commande selon l'une quelconque des revendications 1 à 12, dans lequel l'ordinateur de commande (30) est réalisé lors du traitement d'un des scripts pour rendre toutes les ressources (40) comme étant à nouveau disponibles.
